(19) **Europäisches Patentamt**
**European Patent Office**
**Office européen des brevets**

(11) **EP 4 778 797 A1**

(12) **EUROPEAN PATENT APPLICATION**

(43) Date of publication:
**22.07.2026   Bulletin 2026/30**

(21) Application number: **25153023.4**

(22) Date of filing: **21.01.2025**

(51) International Patent Classification (IPC):
**B60W 10/119** $^{(2012.01)}$     **B60K 23/08** $^{(2006.01)}$
**B60W 10/14** $^{(2012.01)}$     **B60W 10/16** $^{(2012.01)}$
**B60W 30/184** $^{(2012.01)}$     **B60T 7/12** $^{(2006.01)}$
**B60T 8/1769** $^{(2006.01)}$

(52) Cooperative Patent Classification (CPC):
**B60W 10/14; B60K 23/08; B60K 23/0808;**
**B60T 7/12; B60T 8/1769; B60W 10/119;**
**B60W 10/16; B60W 30/184;** B60T 2201/14

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Volvo Truck Corporation**
**405 08 Göteborg (SE)**

(72) Inventors:
• **GROTH, Björn**
**41729 Göteborg (SE)**
• **WÖLFINGER, Alexander**
**442 65 Marstrand (SE)**
• **STRÄNGBERG, Erik Martin**
**41766 Göteborg (SE)**
• **RAKHOLIA, Meet Vitthalbhai**
**431 34 Mölndal (SE)**

(74) Representative: **Kransell & Wennborg KB**
**P.O. Box 2096**
**403 12 Göteborg (SE)**

(54) **IMPROVED DIFFERENTIAL LOCK DISENGAGEMENT**

(57)     Provided is a computer system (100) for facilitating disengagement of a locking differential and/or transfer case (330a, 330b, 330c) of a vehicle or piece of heavy machinery. The computer system includes processing circuitry 110 configured to receive an indication (120) about a desire to disengage the locking differential and/or transfer case and, in response to receiving the indication, initiate a disengagement of the locking differential and/or transfer case and, to facilitate the disengagement, control a brake system (340) of the vehicle or piece of heavy machinery to reduce a torque difference on opposite sides of the locking differential and/or transfer case. A corresponding vehicle, method, computer program, computer program product and computer-readable storage medium are also provided.

Fig. 1

EP 4 778 797 A1

## Description

### TECHNICAL FIELD

The disclosure relates generally to differential gears and/or transfer cases as used in vehicles or pieces of heavy machinery. In particular aspects, the disclosure relates to disengagement of such locking differentials and/or transfer cases. The disclosure can be applied to heavy-duty vehicles, such as trucks, buses, and construction equipment/pieces of heavy machinery, among other vehicle and machinery types. Although the disclosure may be described with respect to a particular vehicle or piece of heavy machinery, the disclosure is not restricted to any particular vehicle or piece of heavy machinery.

### BACKGROUND

Vehicles or pieces of heavy machinery, such as heavy-duty trucks, buses, wheel loaders, articulated dump trucks, etc., may be equipped with one or more differential gears on one or more driven axles, and/or between different driven axles (so-called inter-axle differentials), wherein a differential gear can be locked using a so-called differential lock (or short, diff lock) mechanism. A differential having such a lock may also be referred to as a "locking differential", or similar. When a locking differential on e.g. a wheel axle is engaged (i.e. when the differential is locked), the wheels on the respective side of the axle are forced to rotate with a same speed, even if there are tractional differences for the wheels at either side of the axle. This may be advantageous if the traction for wheels on different sides of the axle differs significantly (so called split-mu conditions), as more engine output torque may be directed towards a wheel for which the traction conditions are better and less towards a wheel for which the traction conditions are worse. By contrast, when the locking differential is disengaged (i.e. when the differential is unlocked/open), the wheels on opposite sides of the axle are instead allowed to rotate at different speeds, which may be required when e.g. negotiating a turn to reduce tire scrubbing. However, an open differential may be less suitable in split-mu conditions as less or no engine output torque will be directed towards the wheel for which the traction conditions are better and more towards the wheel for which the traction conditions are worse, causing the latter wheel to spin freely while the former wheel remains still. Consequently, situations may arise in which it is desirable to switch a locking differential between its engaged and disengaged states, depending on the current driving and surface conditions. A similar situation may also occur in transfer cases, an in particular in hybrid part-/full-time variants that uses a center (locking) differential to switch between e.g. two-wheel drive, full-time four-wheel drive (with the center differential unlocked) and part-time four-wheel drive (with the center differential locked), and similar.

Locking differentials are often implemented using a mechanism driven by air pressure and one or more spring elements, wherein the air pressure needs to be supplied to engage/lock the differential, and wherein the one or more spring elements are provided to disengage/unlock the differential again once the air pressure is removed. In some situations, such as when negotiating a sharp turn, a difference in torque distributed to e.g. the left and right side of the axle, or between multiple axles, may be large, and the spring force providable by the spring may not be large enough to disengage the differential when desired.

In light of the above, the present disclosure seeks to solve the problem of how to reduce the risks of not being able to disengage the differential lock and/or transfer case when required.

### SUMMARY

According to a first aspect of the disclosure, there is provided a computer system for facilitating disengagement of a locking differential and/or transfer case of a vehicle or piece of heavy machinery. The computer system includes processing circuitry configured to receive an indication about a desire (e.g. receive a request or command) to disengage the locking differential and/or transfer case. The processing circuitry is further configured to initiate, in response to receiving the indication, a disengagement of the locking differential and/or transfer case and, to facilitate the disengagement, control a brake system of the vehicle or piece of heavy machinery to reduce a torque difference on opposite sides of the locking differential and/or transfer case. The first aspect may seek to solve the problem of how to facilitate disengagement of the locking differential and/or transfer case. A technical benefit may include that by using the brake system to reduce the torque difference between the opposite sides, the force required by e.g. a spring-based mechanism for such disengagement may be reduced, thereby avoiding the disengagement failing to occur due to excessive torque differences, such as may for example be present during cornering or other driving situations of the vehicle or piece of heavy machinery.

Optionally, in some examples, including in at least one preferred example, the processing circuitry may be configured to estimate, based on wheel forces of the vehicle or piece of heavy machinery, a first brake torque or torque distribution at the opposite sides of the locking differential and/or transfer case required to allow for the disengagement, and to control the brake system to apply the first brake torque or torque distribution at the opposite sides, e.g. by braking one or more wheels of the vehicle or piece of heavy machinery. A technical benefit may include a more accurate calculation of the required brake force that, when applied directly, leads to a quicker disengagement of the locking differential and/or transfer case.

Optionally, in some examples, including in at least one preferred example, the processing circuitry may be configured to control the brake system to directly apply the first brake torque or torque distribution. A technical benefit may include that the time until the differential lock and/or transfer case is possible to disengage may thus be minimized.

Optionally, in some examples, including in at least one preferred example, the processing circuitry may be configured to control the brake system to ramp up an applied brake torque or torque distribution on the opposite sides from a second brake torque or torque distribution that is lower than the first brake torque or torque distribution. A technical benefit may include that the calculation/determining of the first brake torque or torque distribution may thus be less exact, and more allowance for error in e.g. one or more vehicle models used to perform such calculations/determination are accepted, as the ramping will eventually lead to sufficient reduction of the torque difference to allow for the disengagement. By starting at least somewhat close to the first torque or torque distribution, the time required before disengagement is possible may be reduced.

Optionally, in some examples, including in at least one preferred example, the processing circuitry may be configured to ramp up the applied brake torque or torque distribution from zero. A technical benefit may include that e.g. no calculation of the first brake torque or brake torque distribution, based on wheel forces, may be required, as ramping from zero will eventually lead to sufficient reduction of the torque difference to allow for the disengagement.

Optionally, in some examples, including in at least one preferred example, the locking differential may be for a wheel axle of the vehicle or piece of heavy machinery, and the torque difference may be between different sides of the wheel axle. The processing circuitry may be configured to control the brake system to reduce the torque difference by braking one or more wheels on one or more of the different sides of the wheel axle. A technical benefit may include that disengagement may be achieved even when e.g. the vehicle or piece of heavy machinery is turning, operating under split-mu conditions, or similar.

Optionally, in some examples, including in at least one preferred example, the locking differential may be an inter-axle differential between two wheel axles of the vehicle or piece of heavy machinery, and the torque difference may be between the two wheel axles. The processing circuitry may be configured to control the brake system to reduce the torque difference by braking the wheels of one or both of the two wheel axles. A technical benefit may include that the disengagement may be achieved even when e.g. the traction conditions are not the same under each wheel axle, and similar.

Optionally, in some examples, including in at least one preferred example, the transfer case may be between a first set of one or more front wheel axles and a second set of one or more rear wheel axles, and the torque difference may be between a front wheel drive and a rear wheel drive of the vehicle or piece of heavy machinery (where the front wheel drive uses the first set and the rear wheel drive uses the second set, and where e.g. the transfer case may be in a state using both the rear and front wheel drives to for example allow four-wheel drive, all-wheel drive, or similar). The processing circuitry may be configured to control the brake system to reduce the torque difference by braking one or both of the first and second sets, e.g. by braking all wheels on each wheel axle of the first and/or second sets. A technical benefit may include that the transfer case may thus be disengaged even when there is e.g. different traction conditions under each of the first and second sets, and similar.

Optionally, in some examples, including in at least one preferred example, the locking differential may form part of the transfer case. For example, the locking differential may be a central differential and used to switch between part-time and full-time four-wheel drive (or more-than-four-wheel drive, such as all-wheel-drive, and similar), e.g. in both high- and low-gear ranges.

Optionally, in some examples, including in at least one preferred example, the processing circuitry may be configured to request the disengagement of the locking differential and/or transfer case by requesting for removal or reduction of an air and/or hydraulic pressure previously applied to engage the differential lock and/or transfer case. A technical benefit may include that the envisaged processing circuitry may thus be used for locking differentials actuated by air and/or hydraulic pressure.

Optionally, in some examples, including in at least one preferred example, the processing circuitry may be configured to request the disengagement of the locking differential and/or transfer case before the torque difference is sufficiently small to allow the disengagement. A technical benefit may include that the locking differential and/or transfer case may thus be ready to disengage as soon as the torque difference is sufficiently reduced, thereby reducing the time required to cause such disengagement.

According to a second aspect of the present disclosure, there is provided a vehicle or piece of heavy machinery that includes the computer system of the first aspect (or any example thereof described herein), as well as the locking differential and/or transfer case. The second aspect may seek to provide a vehicle or piece of heavy machinery which has the advantages/benefits described already with reference to the computer system of the first aspect (or any example thereof).

Optionally, in some examples, including in at least one preferred example, the locking differential and/or transfer case may include at least one spring element for assisting in the disengagement. A technical benefit may include that force required to disengage may thus be generated by a rather simple and inexpensive element such as a spring, a size of which may be dimensioned taken into account that the envisaged solution reduces the torque difference on the opposite sides of the locking differential and/or transfer case as described herein. Consequently, the spring element may be dimensioned smaller than otherwise, and/or the effect of the spring element may be improved as the torque difference is reduced.

According to a third aspect of the present disclosure, there is provided a (computer-implemented) method for facilitating disengagement of the locking differential and/or transfer case of the vehicle or piece of heavy machinery as e.g. performed by the processing circuitry and computer system of the first aspect (or any example thereof). The method includes receiving, by the processing circuitry, the indication about the desire to disengage the locking differential and/or transfer case; and initiating, by the processing circuitry and in response to receiving the indication, the disengagement of the locking differential and/or transfer case, and to control the brake system to reduce the torque difference on the opposite sides of the locking differential and/or transfer case. The third aspect may seek to solve the problem of how to provide a method that may be performed by processing circuitry of a computer system to achieve the advantages/benefits as described already herein with reference to the computer system of the first aspect (or any example thereof).

According to a fourth aspect, there is provided a computer program (for facilitating disengagement of a locking differential and/or transfer case of a vehicle or piece of heavy machinery). The computer program includes program code for performing, when executed by processing circuitry (of a computer system, such as the processing circuitry of the computer system of the first aspect), the method of the third aspect (or any example thereof). The fourth aspect may seek to solve the problem of how to provide instructions to a computer system and processing circuitry that results in the benefits/advantages as already described herein.

According to a fifth aspect, there is provided a computer program product that includes a computer-readable storage medium on which the computer program of the fourth aspect is stored.

According to a sixth aspect, there is provided a computer-readable storage medium that includes instructions which, when executed by processing circuitry (such as that of the computer system of the first aspect or any example thereof), cause the processing circuitry to perform the method of the third aspect. The fifth and sixth aspect may seek to solve the problem of how to logistically distribute the computer program of the fourth aspect. As envisaged herein, in some examples, the computer-readable storage medium may be non-transitory.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

FIG. 1 schematically illustrates various examples of a computer system as envisaged herein, according to one or more examples.

FIG. 2A schematically illustrates a flowchart of various examples of a method as envisaged herein, according to one or more examples.

FIG. 2B schematically illustrates a flowchart of various suboperations of an operation of controlling a brake system of the method of FIG. 2A as envisaged herein, according to one or more examples.

FIG. 3 schematically illustrates an example vehicle as envisaged herein, according to one or more examples.

FIG. 4 is a schematic diagram of an exemplary computer system for implementing examples disclosed herein, according to an example.

FIG. 5 schematically illustrates an example of various differentials as used on a vehicle as envisaged herein, according to one or more examples.

## DETAILED DESCRIPTION

The detailed description set forth below provides information and examples of the disclosed technology with sufficient detail to enable those skilled in the art to practice the disclosure.

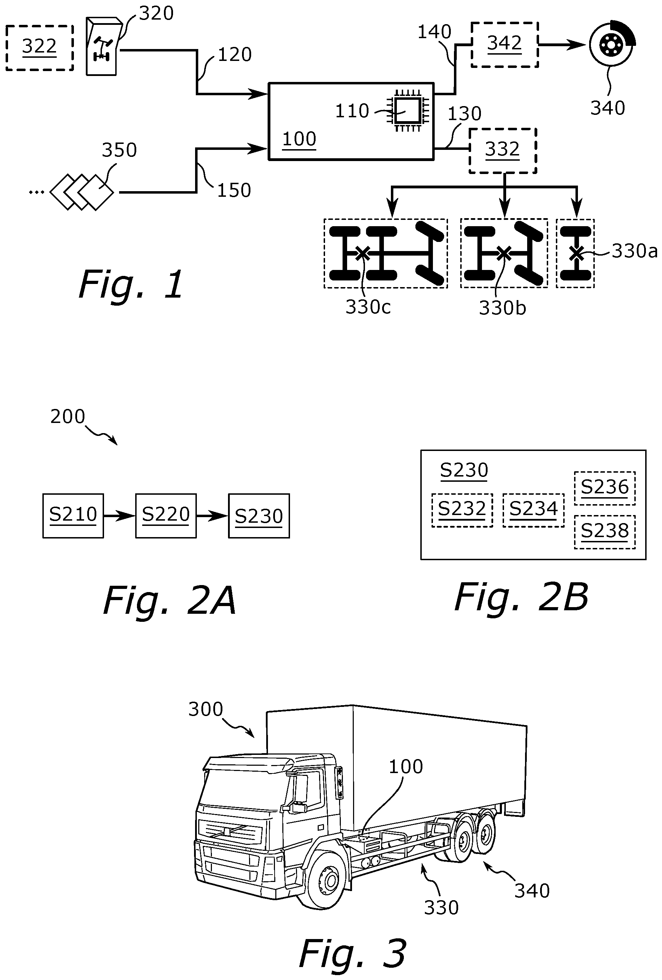

FIG. 1 schematically illustrates various examples of a computer system 100 as envisaged herein, according to one or more examples. The computer system 100 includes processing circuitry 110.

FIG. 2A schematically illustrates a flowchart of various examples of a method 200 as envisaged herein, such as performed by the processing circuitry 110 of the computer system 100.

The computer system 100 includes processing circuitry 100 that is configured to receive (as part of e.g. an operation S210 of the method 200) an indication 120 about a desire to disengage a locking differential and/or transfer case, e.g. 330a, 330b and/or 330c (collectively referred to also as 330), of a vehicle or piece of heavy machinery. In what follows, only a vehicle (e.g. a truck, bus, or similar) will be referred to, although the present disclosure encompasses other types of equipment such as pieces of heavy equipment (e.g. wheel loaders, articulated haulers, dump trucks, excavators, tractors, etc.). The processing circuitry 110 may for example be configured to obtain the indication 120 from e.g. a button 320, lever, switch, or any other operator/driver-selectable entity such as e.g. a selectable option in a menu presented on a display, or similar, e.g. within a cabin of the vehicle, on a smartphone or tablet, from a remote (cloud-based) service/server, or similar. If not indicated by an operator of the vehicle, the indication 120 may also/instead be provided from one or more systems 322 of the vehicle responsible for issuing such a notification to the processing circuitry 110, e.g. from one or more driver assistance systems (DASs), motion assistance systems, vehicle motion management (VMM) systems, and similar. For example, the system 322 may be configured to automatically determine whether 330 should be engaged or disengaged, depending on e.g. estimated road/ground surface conditions, prevailing weather conditions, and/or similar. As another example, the processing circuitry 110 may be configured to receive readings from one or more sensors of the vehicle, and to on its own decide that the locking differential and/or transfer case, 330, is to be disengaged. In such examples, the indication 120 may be received internally by the processing circuitry 110, i.e. issued by the processing circuitry 110 itself. For the sake of the present disclosure, it is not important exactly how, why and from where the indication 120 is provided, as long as the processing circuitry 110 may receive (or issue) the indication 110 and act thereupon.

The processing circuitry 110 is further configured to act upon receiving the indication 120 to facilitate the disengagement of the locking differential and/or transfer case, 330, by controlling a brake system 340 of the vehicle. Phrased differently, the processing circuitry 110 is configured to, in response to receiving the indication 120, initiate (as part of e.g. an operation S220 of the method 200) the disengagement of the locking differential and/or transfer case, 330, and, to facilitate the disengagement, control (as part of e.g. an operation S230 of the method 200) the brake system 340 of the vehicle to reduce the torque difference on opposite sides of the locking differential and/or transfer case 330.

For example, to initiate the disengagement, the processing circuitry 110 may be configured to either communicate directly or indirectly with the locking differential and/or transfer case 330, for example by issuing one or more control messages/commands 130 either directly to 330 and/or to one or more systems 332 responsible for controlling the locking differential and/or transfer case 330. The one or more commands 130 may for example include a command to release an air and/or hydraulic pressure currently being applied at the locking differential 330 in order to engage/lock the latter, such that the later may instead be unlocked.

For example, to control the brake system 340, the processing circuitry 110 may be configured to communicate directly or indirectly with the brake system 340, for example by issuing one or more messages/commands 140 either directly to the brake system 340 and/or to one or more systems 342 responsible for controlling the brake system 340. For example, such commands 140 may include commands to apply a particular brake force using a particular brake at a particular wheel on a particular wheel axle of the vehicle, and/or to apply a particular brake force distribution for a plurality of different brakes responsible for braking a plurality of different wheels (on same and/or different wheel axles) of the vehicle. For example, a control command 140 may include a command to apply a brake torque $T_i$ (or e.g. brake force $F_i$), at an $i$-th brake responsible for braking a $j$-th wheel or wheel axle of the vehicle. As envisaged herein, a brake may be responsible for braking a single wheel or a plurality of wheels (e.g. by braking a wheel axle), and similar. As envisaged herein, a brake torque distribution corresponds to a particular set of such commands, e.g. a set of commands to apply a set of brake torques $\{T_i\}$. For example, a command 140 may include to apply a brake torque $T_1$ on a first wheel of the vehicle, to apply a brake torque $T_2$ on a second wheel of the vehicle, and so on, or e.g. to apply a brake torque $T_A$ on a first wheel axle of the vehicle, to apply a brake torque $T_B$ on a second wheel axle, and similar, of the vehicle. In fact, a command 140 may include any combination of brake torque(s) to be applied at any combination of one or more wheels of the vehicle. Of course, a command need no necessarily to specify a particular torque value, but may instead (or in addition) specify e.g. a percentage (such as between 0 and 100 %) of a maximum brake force, a force (that may be converted into brake torque), or similar. Generally, whether braking of one or more wheels is performed by specifying a desired torque, percentage, force, etc., is not important, as long as an amount of braking that is performed for each wheel of the vehicle can be achieved.

By controlling the brake system 340 of the vehicle, the processing circuitry 110 and computer system 100 can thus facilitate disengagement of the locking differential and/or transfer case, 330, by reducing the torque difference on the opposite sides of the latter.

In some examples, as envisaged herein, the locking differential 330a may be for a wheel axle of the vehicle, and i.e. serve to either provide a same torque (if in an open/disengaged stated) to one or more wheels on each side of the locking differential 330a (thereby allowing the wheels on each side to rotate at different speeds), or to force (if in a locked/engaged state) the wheels on opposite sides (e.g. left and right) to rotate with a same speed, as is common use for such locking differentials for wheel axles. As generally used herein, "opposite sides" of a differential mean e.g. the output sides of an axle differential, e.g. at both of the shafts to which power is routed from the input side (e.g. from a transmission/engine), e.g. left and right (output) sides. For a transfer case, the opposite sides mean e.g. the output sides, e.g. a side with a shaft providing power to a front of the vehicle and a side with a shaft providing power to a rear of the vehicle, as power by the input side (from e.g. a transmission/engine). For an inter-axle differential, opposite sides mean the input side from e.g. the transmission/engine and the side with the shaft going to e.g. an axle differential on another axle. Phrased differently, for an inter-axle differential, opposite sides do not refer to the shafts going to e.g. left- and right-hand side wheels, but to an input shaft (from e.g. a transmission/engine or some other differential/transfer case) and an output shaft to some other differential/transfer case). For e.g. a center differential, opposite sides mean similar to the inter-axle differential or transfer case, e.g. not left and right wheel shafts but e.g. different shafts each going to one of a transmission/engine, other differential, transfer case, and similar. Phrased differently, as envisaged herein, the opposite sides of a differential are any two sides for which the shafts are either locked, such that their rotational speed are forced to be the same, or unlocked, in which case they are allowed to rotate at different speeds.

In some examples, as envisaged herein, the locking differential 330b may be a center differential used to distribute force to front and rear wheel axles of the vehicle, e.g. to a first set of one or more front wheel axles and a second set of one or more rear wheel axles, wherein "front" and "rear" are defined in relation to where the wheel axles are located in relation to the differential 330b. Such a center differential may for example for part of a transfer case used to regulate whether the vehicle should be e.g. two-wheel driven (2WD), four-wheel driven (4WD) and whether, when in a 4WD state, both sets of wheel axles should be allowed to rotate at different (e.g. with the center differential open) or a same (e.g. with the center differential locked) rotational speed. In such an example, the locking differential may be assumed to form part of the transfer case. In other examples, the transfer case may not include the locking differential, but may be switchable between a state in which e.g. only one wheel axle (e.g. rear or front) is powered and another state in which e.g. both wheel axles (e.g. front and rear) are powered by the transfer case. In such situations, 330b may be used to refer to the transfer case. In any case, for a center differential and/or transfer case, the opposite sides refer e.g. to any pair of shafts for which their individual rotations are either locked or allowed to rotate at different speeds.

In some examples, as envisaged herein, the locking differential 330c may be a (lockable) inter-axle differential provided between two wheel axles, and configure to control whether both wheel axles should be rotating with a same (in a locked state) rotation speed or allowed to rotate with a different (in an open state) rotation speed.

In some examples, combinations of one or more center differentials and/or transfer cases, and one or more inter-axle differentials may of course also be possible. For example, a center differential and/or transfer case may be configured to provide power on one side to e.g. an input side of an inter-axle differential, and similar. In such a situation, at least one side of e.g. the center differential and/or transfer case may refer to an input side to the inter-axle differential.

In any envisaged situation, disengaging the locking differential (such as 330a, 330b and/or 330c) and/or transfer case (such as 330b) may be difficult if a torque difference between the opposite sides is too high, e.g. if the torque difference exceeds a threshold value. A size of this threshold value may depend on multiple factors, e.g. on how the locking differential and/or transfer case 330 is actuated to be disengage (e.g. properties and count of one or more spring element used for such disengagement, or similar), on frictional properties, rotational speed, and/or of any other factors that may influence how a torque difference influences the possibility to disengage the locking differential and/or transfer case, 330. As the processing circuitry 110 of the computer system 100 is configured to use/control the brake system 340 to reduce such a torque difference, it is envisaged that such issues present in contemporary solutions may at least partially be overcome.

For example, in case of the wheel axle locking differential 330a, the processing circuitry 110 may be configured to control the brake system 340 to reduce the torque difference by braking one or more wheels on one or more of the opposite sides of the differential 330a. For example, to reduce the torque difference, the processing circuitry 110 may be configured to increase or initiating a braking of one or more wheels on a higher-torque side, and/or to reduce a braking (if already initiated) of one or more wheels on a lower-torque side, to reduce the torque difference between the opposite sides. As another example, in case of the center differential and/or transfer case 330b, and/or the inter-axle differential 330c, the processing circuitry 110 may be configured to control the brake system 340 to reduce the torque difference by braking one or more wheel axles on one or more of the opposite sides. For example, to reduce the torque difference, the processing circuitry 110 may be configured to control the brake system 340 to increase or initiating a braking of one or more wheel axles on a higher-torque side, and/or to reduce a braking (if already initiated) of one or more wheel axles on a lower-torque side. For a combination of different locking differentials, such as any combination of two or more of 330a, 330b and 330c, the processing circuitry 110 may be configured to control the brake system 340 to apply braking on one or more wheels of the vehicle in a way that achieves the desired effect, namely to reduce the torque difference between opposite sides on the entity that is to be disengaged. If the indication 120 indicates a desire to disengage more than one of 330a, 330b and 330c, the processing circuitry 110 may control the brake system 340 accordingly, to reduce the torque difference between opposite sides of each such entity, either simultaneously (if possible) or sequentially (in an order that may be determined by the processing circuitry 110 e.g. based on a current driving situation, on current road/surface conditions, and similar).

**FIG. 2B** schematically illustrates how, in some examples as envisaged herein, the operation S230 of controlling the brake system 340 to reduce torque difference may be performed by the processing circuitry 110.

In some examples, the processing circuitry 110 may be configured to (as part of e.g. an operation S232 of the method 200) obtain readings/estimates of one or more wheel forces of the vehicle, e.g. as part of one or more readings 150 from one or more sensors 350 (or estimators) of the vehicle suitable to provide such readings/estimates. The processing circuitry 110 may e.g. receive estimates of the one or more wheel forces directly from the one or more sensors 350, or obtain readings from the one or more sensors 350 based on which the processing circuitry 110 itself may perform such estimates. For example, the torque applied on one of the opposite sides of a locking differential or transfer case, such as wheel shaft torque on a whole axle, and/or wheel shaft torque on each side of a whole axle, may be considered as a sum of wheel torque created by wheel forces and applied brake torque. For example, a wheel shaft torque $T_{shaft}$ may be written as

$$T_{shaft} = \sum T_{wf,j} + \sum T_{brake,j},$$

where the sum is taken over all wheels on the wheel shaft, and where $T_{wf,j}$ indicates torque resulting from wheel forces $F_j$ and $T_{brake,j}$ indicates torque resulting from applying the brakes to the corresponding wheel. If denoting by $T_{shaft,1}$ the torque on one side of e.g. a locking differential and by $T_{shaft,2}$ the torque on another, opposite side of the locking differential, it may be assumed that disengaging the locking differential is only possible if

$$\Delta T = \left| T_{shaft,1} - T_{shaft,2} \right| < \Delta T_{threshold},$$

where $\Delta T$ is the torque difference referred to herein and $\Delta T_{threshold}$ a threshold value for such a torque difference. As envisaged herein, the difference $\Delta T$ may be brought below the threshold value $\Delta T_{threshold}$ by using the brake system 340 of the vehicle to control $T_{brake,j}$ and thereby $\sum T_{brake,j}$. Of course, if the brake system 340 may brake only a whole axle and not individual wheels of the axle, $\sum T_{brake,j}$ may be replaced with e.g. $T_{brake,shaft}$ corresponding to the brake force applied directly to the shaft (or axle).

The processing circuitry 110 may be further configured to estimate (as part of e.g. an operation S234 of the method 200, and based on the readings/estimates of wheel forces from the one or more sensors (or estimators) 350), a first torque or torque distribution (e.g. $\{T_{brake,j}\}$) at the opposite sides of the locking differential and/or transfer case that is required to allow for the disengagement, e.g. such that $\Delta T$ becomes less than $\Delta T_{threshold}$. The processing circuitry 110 may then, as part of operation S230, control the brake system to apply the first brake torque or torque distribution at the opposite sides. The first brake torque or torque distribution may for example indicate how/if each wheel on an axle is to be braked, how/if each wheel axle is to be braked, and similar, to achieve the desired result.

In some examples, the processing circuitry 110 may be configured to calculate (as part of e.g. operation S234, and e.g. when the vehicle is turning) the wheel forces from e.g. a tire model, given knowledge about vehicle geometry, axle weights, a current steering angle (such as e.g. obtained as part of the readings 150), an effective shaft torsional stiffness, and/or similar, and to based thereon calculate the difference of wheel shaft torque, e.g. $\Delta T$, and how to introduce (or modify) the applied brake torque/torque distribution to make $\Delta T$ (if not already) go below $\Delta T_{threshold}$. For example, the processing circuitry 110 may be configured to calculate the brake torque/torque distribution to be applied to make $\Delta T$ go to zero, or at least to go below $\Delta T_{threshold}$, given that the processing circuitry 110 is capable of calculating the wheel forces and corresponding wheel torque $\sum T_{wf,j}$.

In some examples, the processing circuitry 110 may be configured to control (as part of e.g. an operation S236) the brake system 340 to directly (e.g. immediately, without delay, as quickly as practicable, at a maximum rate, etc.) apply the calculated (first) brake torque or torque distribution, e.g. by indicating the desired brake torque or torque distribution as part of the output 140. This may result in an optimal (i.e. minimum) time required to enable the disengagement.

In some examples, the processing circuitry 110 may instead be configured to determine (as part of e.g. an operation S238 of the method 200) a second brake torque or torque distribution that is below (i.e. smaller than) the first brake torque or torque distribution, and to instead command a gradual increase (e.g. a ramp-up) of the applied brake torque from the second brake torque or torque distribution. The brake torque may be applied and gradually increased for each wheel independently, or e.g. using a common increase rate for all wheels that are to be braked. Once the applied brake torque reaches the threshold $\Delta T_{threshold}$, the disengagement will be possible. Although this may require a bit more time than if directly applying the required brake torque or torque distribution, this alternative solution is less sensitive to the exactness of the calculated required brake torque or torque distribution, and will work even if the calculated required brake torque or torque distribution happen to be too small (due to e.g. lack of calculational precision, errors/uncertainties of the model used to find the wheel forces, and similar).

In some examples, the processing circuitry 110 may instead be configured to cause/command (as part of the operation S230) a ramp-up of the applied brake torque or torque distribution from zero value(s) or from one or more values close to zero. Once the applied brake torque or torque distribution reaches the threshold $\Delta T_{Threshold}$, the disengagement will be possible. This alternative solution has the benefit that the processing circuitry 110 does not need to e.g. obtain/calculate the wheel forces, the threshold $\Delta T_{threshold}$, and similar, at the expense that the time required before the disengagement is possible may be further prolonged. Other alternatives of how exactly to cause the torque difference $\Delta T$ between the opposite sides of the locking differential and/or transfer case, 330, to become sufficiently small to allow the disengagement, are of course also possible and envisaged herein.

In some examples, the processing circuitry 110 may be configured to request the disengagement of the locking differential and/or transfer case before the torque difference $\Delta T$ is sufficiently small to allow the disengagement. Phrased differently, in some examples, the operation S220 may be performed before the operation S230. A benefit may include that the locking differential and/or transfer case is thus made as ready as possible (e.g. by reducing an air and/or hydraulic pressure thereof) to disengage once the torque difference $\Delta T$ e.g. goes below $\Delta T_{Threshold}$, e.g. once the brake system 340 has sufficiently applied the required brake torque or torque distribution as commanded by the processing circuitry 110. In other examples, the processing circuitry 110 may instead be configured to wait with operation S220 and the request to disengage the locking differential and/or transfer case, 330, until operation S230 has been completed, i.e. the order of operation S220 and S230 may be reversed compared to what is shown in FIG. 2A.

**FIG. 3** schematically illustrates an example vehicle in form of a box-cargo truck 300. The truck 300 includes the processing circuitry 100 as described herein, the brake system 340 and the locking differential and/or transfer case, 330 (such as one or more of 330a, 330b and 330c as shown in FIG. 1). The truck 330 serves only to illustrate one of many possible, and envisaged, examples of a vehicle or piece of heavy machinery. As envisaged herein, a vehicle or piece of heavy machinery may be of any type for which there is a desire to more easily disengage a locking differential and/or transfer case, and may for example be a truck, truck plus trailer combination, bus, wheel loader, tractor, (articulated) hauler, dump truck, excavator, or any other such vehicle or piece of heavy machinery.

As already mentioned herein, in some examples, the locking differential may form part of the transfer case, e.g. if the transfer case includes a center differential used to control whether multi-axle propulsion is to be performed with all driven axles rotating at a same rotation speed (locked state), or if one or more driven wheel axles are allowed to rotate with different rotation speeds (open state).

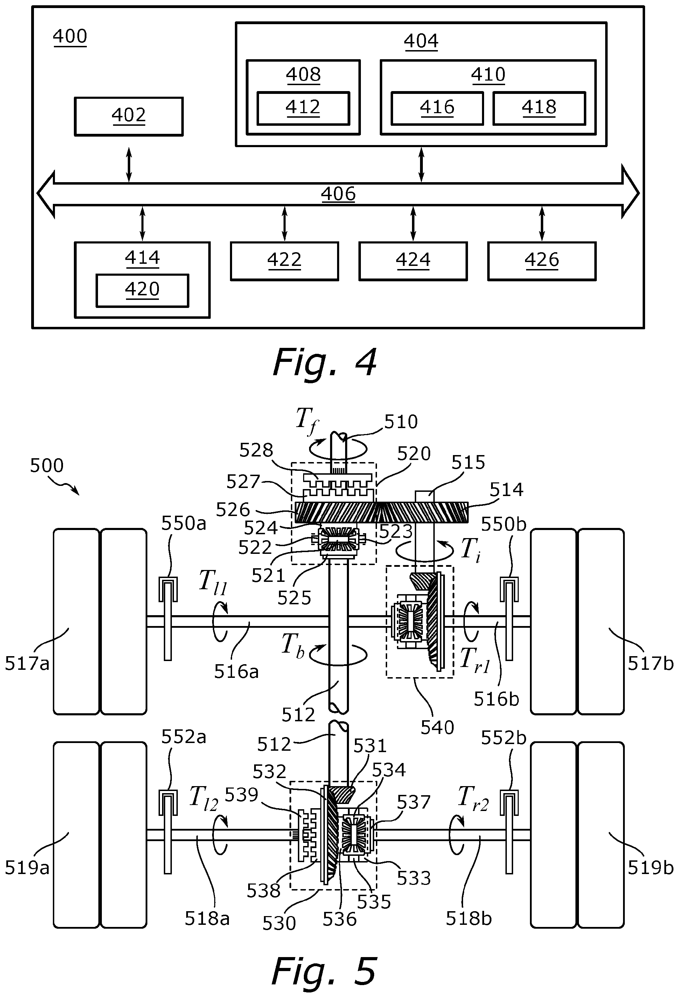

**FIG. 4** is a schematic diagram of a computer system 400 for implementing examples disclosed herein. The computer system 400 is adapted to execute instructions from a computer-readable medium to perform these and/or any of the functions or processing described herein. The computer system 400 may be connected (e.g.,

networked) to other machines in a LAN (Local Area Network), LIN (Local Interconnect Network), automotive network communication protocol (e.g., FlexRay), an intranet, an extranet, or the Internet. While only a single device is illustrated, the computer system 400 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 400 may comprise at least one computing device or electronic device capable of including firmware, hardware, and/or executing software instructions to implement the functionality described herein. The computer system 400 may include processing circuitry 402 (e.g., processing circuitry including one or more processor devices or control units), a memory 404, and a system bus 406. The computer system 400 may include at least one computing device having the processing circuitry 402. The system bus 406 provides an interface for system components including, but not limited to, the memory 404 and the processing circuitry 402. The processing circuitry 402 may include any number of hardware components for conducting data or signal processing or for executing computer code stored in memory 404. The processing circuitry 402 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 402 may further include computer executable code that controls operation of the programmable device.

The system bus 406 may be any of several types of bus structures that may further interconnect to a memory bus (with or without a memory controller), a peripheral bus, and/or a local bus using any of a variety of bus architectures. The memory 404 may be one or more devices for storing data and/or computer code for completing or facilitating methods described herein. The memory 404 may include database components, object code components, script components, or other types of information structure for supporting the various activities herein. Any distributed or local memory device may be utilized with the systems and methods of this description. The memory 404 may be communicably connected to the processing circuitry 402 (e.g., via a circuit or any other wired, wireless, or network connection) and may include computer code for executing one or more processes described herein. The memory 404 may include non-volatile memory 408 (e.g., read-only memory (ROM), erasable programmable read-only memory (EPROM), electrically erasable programmable read-only memory (EEPROM), etc.), and volatile memory 410 (e.g., random-access memory (RAM)), or any other medium which can be used to carry or store desired program code in the form of machine-executable instructions or data structures and which can be accessed by a computer or other machine with processing circuitry 402. A basic input/output system (BIOS) 412 may be stored in the non-volatile memory 408 and can include the basic routines that help to transfer information between elements within the computer system 400.

The computer system 400 may further include or be coupled to a non-transitory computer-readable storage medium such as the storage device 414, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 414 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 414 and/or in the volatile memory 410, which may include an operating system 416 and/or one or more program modules 418. All or a portion of the examples disclosed herein may be implemented as a computer program 420 stored on a transitory or non-transitory computer-usable or computer-readable storage medium (e.g., single medium or multiple media), such as the storage device 414, which includes complex programming instructions (e.g., complex computer-readable program code) to cause the processing circuitry 402 to carry out actions described herein. Thus, the computer-readable program code of the computer program 420 can comprise software instructions for implementing the functionality of the examples described herein when executed by the processing circuitry 402. In some examples, the storage device 414 may be a computer program product (e.g., readable storage medium) storing the computer program 420 thereon, where at least a portion of a computer program 420 may be loadable (e.g., into a processor) for implementing the functionality of the examples described herein when executed by the processing circuitry 402. The processing circuitry 402 may serve as a controller or control system for the computer system 400 that is to implement the functionality described herein.

The computer system 400 may include an input device interface 422 configured to receive input and selections to be communicated to the computer system 400 when executing instructions, such as from a keyboard, mouse, touch-sensitive surface, etc. Such input devices may be connected to the processing circuitry 402 through the input device

interface 422 coupled to the system bus 406 but can be connected through other interfaces, such as a parallel port, an Institute of Electrical and Electronic Engineers (IEEE) 1394 serial port, a Universal Serial Bus (USB) port, an IR interface, and the like. The computer system 400 may include an output device interface 424 configured to forward output, such as to a display, a video display unit (e.g., a liquid crystal display (LCD) or a cathode ray tube (CRT)). The computer system 400 may include a communications interface 426 suitable for communicating with a network as appropriate or desired.

**FIG. 5** schematically illustrates an arrangement 500 of various differentials of a vehicle as envisaged herein, such as the vehicle 300, and further explains how the envisaged solution reduces torque difference on opposite sides of one or more of such differentials.

In this particular example, an input shaft 510 is powered from e.g. a transmission/engine of the vehicle. For example, a vehicle driveshaft may be coupled to the input shaft 510 using an input yoke, or similar. The input shaft 510 is an input shaft of an inter-axle differential 520. The inter-axle differential includes a "spider" (or e.g. "cross-shaft") 521 part of a differential case, that is configured to rotate along with the input shaft 510, i.e. around a same axis of rotation as that of the input shaft 510. For example, the spider/differential case 521 is connected to the input shaft 512 using splines. The spider 521 includes a plurality of spider gears 522, 523, that may in some examples include more than two spider gears.

On a side closer to the input shaft 510 is provided a first side gear 524 that is physically connected to a first (helical) drive gear 526. For example, the first side gear 524 is welded or bolted to the first drive gear 526, such that the first drive gear 526 and first side gear 524 rotate together around a same axis of rotation. On another, opposite side further away from the input shaft 510, the inter-axle differential 520 includes a second side gear 525 that is connected to an output shaft 512 of the inter-axle differential 520. The second side gear 525 is physically connected (e.g. welded, bolted, or similar) to the output shaft 512, such that the second side gear 525 and output shaft 512 rotate together around a same axis of rotation.

The first side gear 524 and first drive gear 526 are not physically connected to the input shaft 510, and the combination of gears and spider/differential case thus forms a differential that allows the first drive gear 526 and the output shaft 512 to rotate at different speeds, in accordance with a principle of least resistance. That is, if the output shaft 512 is held fixed, only the first drive gear 526 will rotate as the input shaft 510 is turned. Similarly, if the first drive gear 526 is held fixed, only the output shaft 512 will rotate when the input shaft 510 is turned. This because of the interaction between the first and second side gears 524 and 525 and the spider gears 522, 523 of the spider/differential case 521.

The inter-axle differential 520 further includes a jaw-type clutch, including a fixed element 527 that is physically attached (and forced to rotate with) the first drive gear 526, and a moving element 528 that is e.g. splined to the input shaft 510. The inter-axle differential 520 is thus a locking (inter-axle) differential. With the two elements 527 and 528 separated as illustrated in FIG. 5, the first drive gear 526 is not necessarily forced to rotate with the input shaft 510, as long as the output shaft 512 is not held fixed. However, if the element 528 is forced to interlock with the element 527, i.e. by forcing the element 528 against the element 527 such that jaws of the element 528 interact with those of the element 527, the inter-axle differential is transitioned into a locked state, in which the first drive gear 526 and the output shaft 512 are forced to rotate at a same speed, as the input shaft 510, first gear 526, first side gear 524 and second side gear 525 (and output shaft 512) will all be forced to rotate together, due to the spider gears 522, 523 then no longer being allowed to move around the circumference of one of the first and second side gears 524, 525. Phrased differently, the inter-axle differential 512 can be transitioned into a locked (or engaged) state by making the element 528 interact/lock with the element 527, i.e. by forcing the element 528 to move against the element 527 by pushing the element 528 in a direction along that of the input shaft 510 and towards the element 528. Likewise, the inter-axle differential 520 can be transitioned into an open (or disengaged) state by moving the element 528 in the opposite direction, to make sure that the element 528 no longer engages the element 527. Movement of the element 528 towards the element is often achieved by applying air (or e.g. hydraulic) pressure (e.g. to a piston). One or more spring elements are often provided to at least partially oppose such motion, and such that the element 528 is returned back such that it no longer engages the element 527 once the air pressure is removed. Phrased differently, applying the air pressure may transition the inter-axle differential 520 to its locked/engaged state, and removing the air pressure (along with the help of the one or more spring elements) may transition the inter-axle differential 520 back to its open/-disengaged state.

In this particular example, the first drive gear 526 is in a gear-connection with a second drive gear 514 that is attached to a second input shaft 515. The second input shaft 515 rotates together with the second drive gear 514 (in a direction opposite that of the input shaft 510 and first drive gear 526. The input shaft 515 is an input shaft to an axle-differential 540, that may follow the common working-principle of axle-differentials, and allow output wheel shafts 516a and 516b (on which respective one or more wheels 517a and 517b, respectively, are mounted) to rotate at different rotation speeds. The axle differential 540 may or may not be a locking differential. Commonly, the combination of the inter-axle differential 520 and the axle differential 540 may be referred to as a "front differential", in that it is the first differential connected to a first (rear) wheel axle of the vehicle, such as that including the wheel axle shafts 516a, 516b, and in that its output shaft 512 may be connected to a second (rear) wheel axle of the vehicle, in case the vehicle has more than one rear wheel axle, or e.g. as input to yet another inter-axle differential of the vehicle (in case the vehicle has more than two driven axles).

One such example will be described herein, and is illustrated in FIG. 5. In this example, the output shaft 512 from the inter-axle differential 520 is an input shaft 512 to an axle-differential 530, that operates using conventional axle differential principles. The input shaft 512 is connected to a pinion gear 53 1, that in turn drives a drive ring gear 532. Physically connected (e.g. bolted, welded, or similar) to the drive ring gear 532 is a spider/-case 533, that includes spider gears 534 and 535 (such as two, three or more such spider gears). The spider 533 is forced to rotate along with the drive ring gear 532, i.e. around a same axis of rotation. A left wheel shaft 518a goes through (and is not physically connected to) the drive ring gear 532, but is instead physically connected to a first side gear 536. Likewise, a right wheel shaft 518b is connected to a second side gear 537. The first and second side gears 536 and 537 interact with the spider gears 534, 535, such that when the drive ring gear 532 and spider/case 533 rotate, the rotation is transferred to one or both of the left and right wheel shafts 518a, 518b. Respective one or more wheels 519a, 519b are mounted on the left and right wheel shafts 518a, 518b, as illustrated in FIG. 5. There is thus a differential action caused by the interaction of the pinion gear 531, drive ring gear 532, spider/case 533 and spider gears 534, 535, and the first and second side gears 536, 537 of the axle differential 530. For example, if the wheel shaft 518a is held fixed, the other wheel shaft 518b is still able to rotate along with the input shaft 512, and vice versa.

The axle differential 530 is, in this example, a locking differential. A jaw-like clutch is provided by a first element 538 and a second element 539, wherein the first element 538 is physically attached (e.g. welded, bolted, etc.) to the drive ring gear 532. The second element 539 is allowed to rotate along with the wheel shaft 518a. For example, the second element 539 is splined to the wheel shaft 518a. The second element 539 is transferable between a state in which it does not engage the first element 538, and a state in which it does engage the first element 539, similar to what has already been described for the jaw-like clutch formed by the elements 527 and 528 of the inter-axle differential 520. The second element 538 may for example be operated using air (or e.g. hydraulic) pressure and one or more spring elements, such that application of pressure causes the second element 539 to move towards, and engage with, the first element 538, thereby forcing the wheel shafts 518a and 518b to rotate with a same rotation speed (i.e., the axle differential 530 is then in a locked/engaged state). Releasing the pressure, and with help of the one or more spring elements, the second element 539 is moved back, away from the first element 538, and the wheel shafts 518a and 518b are once again allowed to rotate with different rotation speeds, i.e. the axle differential 530 is transitioned into its open/disengaged state.

The solution as envisaged herein applies to e.g. a setup such as 500 illustrated in FIG. 5. To be able to disengage the inter-axle differential 520, the one or more spring elements may not be strong enough to separate the elements 527 and 528 if a torque difference on opposite sides of the inter-axle differential 520 is too large, i.e. if $\Delta T_1 = T_f - T_b$ exceeds some threshold value, where $T_f$ is the torque on the side of the input shaft 510, and where $T_b$ is the torque on the (opposite) side of the output shaft 512 of the inter-axle differential 520.

Likewise, the one or more spring elements used to disengage the axle differential 530 may fail to provide sufficient force to separate the elements 538 and 539 of the axle differential 530, if a torque difference on opposite sides of the axle differential 530 is too large, i.e. if $\Delta T_2 = T_{l1} - T_{l2}$ exceeds some threshold value, where $T_{l1}$ is the torque on the side of the wheel shaft 518a and $T_{l2}$ is the torque on the (opposite) side of the wheel shaft 518b of the axle differential 530.

As envisaged herein, the torque difference $\Delta T_1$ and/or $\Delta T_2$ can be reduced by controlling a brake system of the vehicle. For example, such a brake system may include a series of brake actuators, such as an actuator 550a for the wheel shaft 516a, an actuator 550b for the wheel shaft 516b, an actuator 552a for the wheel shaft 518a, and an actuator 552b for the wheel shaft 518b. For example, to reduce the torque difference $\Delta T_2$, a computer system as envisaged herein may control a braking of one or both of the actuators 552a and 552b, e.g. by engaging/controlling one or more brake actuators on the opposite sides of the axle differential 530. As another example, to reduce the torque difference $\Delta T_1$, the computer system may (also) control the actuators 550a and 550b, to e.g. brake one or both of the wheel axles (where one wheel axle includes the wheel shafts 516a and 516b, and the other wheel axle includes the wheel shafts 518a and 518b). For example, the torque $T_f$ may be related to the input torque $T_i$ of the differential 540, that may be controlled by braking/engaging both of actuators 550a and 550b. Likewise, the torque $T_b$ on the other, opposite side of the inter-axle differential 520 may be controlled by braking/engaging both of the actuators 552a and 552b. Phrased differently, for the inter-axle differential 520, reducing the torque difference $\Delta T_2$ can be obtained by braking one or both of two wheel axles powered from opposite sides of the inter-axle differential 520, while reducing the torque difference $\Delta T_1$ of the axle differential 530 can be obtained by braking one or both of two wheel shafts powered from opposite sides of the axle differential 530.

As described earlier herein, the actuators 550a, 550b, 552a, and/or 552b may be controlled to either directly apply the braking torque required to reduce the torque difference $\Delta T_1$ and/or $\Delta T_2$ sufficiently for the jaw-like clutches to disengage, where how much brake torque that is required may be calculated by the envisaged computer system based on e.g. wheel forces as obtained from one or more tire models and similar. In other examples, the actuators 550a, 550b, 552a and/or 552b may be controlled to gradually increase the applied braking torque(s) until the one or more jaw-like clutches disengage, e.g. from zero braking torque or from some value below a calculated value required to directly disengage the one or more jaw-like clutches.

The solution as envisaged herein, of controlling a brake system of the vehicle to facilitate disengagement of a locking differential, may of course apply also to other configurations of one or more locking differentials than the configuration 500 of the example illustrated in FIG. 5. For example, the envisaged solution applies if there is a single, axle-differential, a single inter-axle differential, a transfer case, a center differential, or to any combination of such differential elements, as long as controlled operation of the brake system can result in a reduction of torque difference on opposite sides of one or more (locking) differentials that are to be disengaged. Such torque differences may for example arise when driving the vehicle in a curve, where different torque is distributed to e.g. left and right wheel shafts, and wherein the spring force of the spring element(s) is not sufficient to overcome such torque differences to disengage the locking differential (or transfer case).

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

The following is a non-exhaustive list of examples as envisaged herein:

Example 1: A computer system for facilitating disengagement of a locking differential and/or transfer case of a vehicle or piece of heavy machinery, the computer system including processing circuitry configured to: receive an indication about a desire to disengage the locking differential and/or transfer case; and, in response to receiving said indication, initiate a disengagement of the locking differential and/or transfer case and, to facilitate said disengagement, control a brake system of the vehicle or piece of heavy machinery to reduce a torque difference on opposite sides of the locking differential and/or transfer case.

Example 2: The computer system of example 1, wherein the processing circuitry is configured to estimate, based on wheel forces of the vehicle or piece of heavy machinery, a first brake torque or torque distribution at the opposite sides of the locking differential and/or transfer case required to allow for the disengagement, and to control the brake system to apply the first brake torque or torque distribution at the opposite sides.

Example 3: The computer system of example 2, wherein the processing circuitry is configured to control the brake system to directly apply the first brake torque or torque distribution.

Example 4: The computer system of example 2, wherein the processing circuitry is configured to control the brake system to gradually increase an applied brake torque or torque distribution on the opposite sides from a second brake torque or torque distribution lower than the first brake torque or torque distribution.

Example 5: The computer system of any one of the preceding examples, wherein the processing circuitry is configured to control the brake system to ramp up an applied brake torque or torque distribution from zero.

Example 6: The computer system of any one of the preceding examples, wherein the locking differential is (an axle differential) for a wheel axle, wherein the torque difference is between different sides of the wheel axle, and wherein the processing circuitry is configured to control the brake system to reduce the torque difference by braking one or more wheels on one or more of the different sides of the wheel axle.

Example 7: The computer system of any one of the preceding examples, wherein the locking differential is an inter-axle differential between two wheel axles (or between one wheel axle and another differential), wherein the torque difference is between the two wheel axles, and wherein the processing circuitry is configured to control the brake system to reduce the torque difference by braking the wheels of one or both of the two wheel axles.

Example 8: The computer system of any one of the preceding examples, wherein the transfer case is between a first set of one or more front wheel axles and a second set of one or more rear wheel axles, wherein the torque difference is between a front wheel drive and a rear wheel drive, and wherein the processing circuitry is configured to control the brake system to reduce the torque difference by braking one or both of the first and second sets.

Example 9: The computer system of example 8, wherein the locking differential forms part of the transfer case.

Example 10: The computer system of any one of the preceding examples, wherein the processing circuitry is configured to request the disengagement of the locking differential and/or transfer case by requesting for removal or reduction of an air and/or hydraulic pressure previously applied to engage the differential lock and/or transfer case.

Example 11: The computer system of example 10, wherein the air and/or hydraulic pressure is used to, when applied, engage a clutch of the locking differential and/or transfer case. Example 12: The computer system of any one of the preceding examples, wherein the processing circuitry is configured to request the disengagement of the locking differential and/or transfer case before the torque difference is sufficiently small to allow the disengagement.

Example 13: The computer system of any one of the preceding examples, wherein the processing circuitry is configured to obtain indications of torque applied on the opposite sides from one or more sensors configured to measure such torque, and to calculate, based thereon, the torque difference.

Example 14: The computer system of example 13, wherein the one or more sensors include one or more strain-gauge sensors or similar mounted on e.g. one or more shafts.

Example 15: The computer system of any one of the preceding examples, wherein the processing circuitry is further configured to receive an indication about a desire to engage the locking differential and/or transfer case, and to, in response thereto, request for engagement of the locking differential and/or transfer case, and to control the brake system and/or a propulsion system of the vehicle to reduce a shaft rotation speed difference on the opposite sides of the locking differential and/or transfer case to facilitate the engagement thereof. Example 16: A vehicle or heavy piece of machinery including the computer system of any one of the preceding examples, and the locking differential and/or transfer case.

Example 17: The vehicle of example 16, wherein the locking differential and/or transfer case includes at least one spring element for assisting in the disengagement.

Example 18: A computer-implemented method for facilitating disengagement of a locking differential and/or transfer case of a vehicle or piece of heavy machinery, the method being performed by processing circuitry of a computer system, the method including: receiving , by the processing circuitry, an indication about a desire to disengage the locking differential and/or transfer case; initiating , by the processing circuitry and in response to receiving said indication, a disengagement of the locking differential and/or transfer case and, to facilitate said disengagement, controlling a brake system of the vehicle or piece of heavy machinery to reduce a torque difference on opposite sides of the locking differential and/or transfer case.

Example 19: A computer program including program code for performing, when executed by the processing circuitry, the method of example 17.

Example 20: A computer-readable storage medium including instructions which, when executed by the processing circuitry, cause the processing circuitry to perform the method of example 17.

## Claims

1. A computer system (100, 400) for facilitating disengagement of a locking differential (330) and/or transfer case of a vehicle (300) or piece of heavy machinery, the computer system comprising processing circuitry (110, 402) configured to:

   - receive an indication (120) about a desire to disengage the locking differential and/or transfer case; and,
   - in response to receiving said indication, initiate a disengagement of the locking differential and/or transfer case and, to facilitate said disengagement, control a brake system (340) of the vehicle or piece of heavy machinery to reduce a torque difference on opposite sides of the locking differential and/or transfer case.

2. The computer system of claim 1, wherein the processing circuitry is configured to estimate, based on wheel forces of the vehicle or piece of heavy machinery, a first brake torque or torque distribution at the opposite sides of the locking differential and/or transfer case required to allow for the disengagement, and to control the brake system to apply the first brake torque or torque distribution at the opposite sides.

3. The computer system of claim 2, wherein the processing circuitry is configured to control the brake system to directly apply the first brake torque or torque distribution.

4. The computer system of claim 2, wherein the processing circuitry is configured to control the brake system to gradually increase an applied brake torque or torque distribution on the opposite sides from a second brake torque or torque distribution lower than the first brake torque or torque distribution.

5. The computer system of any one of the preceding claims, wherein the processing circuitry is configured to control the brake system to ramp up an applied brake torque or torque distribution from zero.

6. The computer system of any one of the preceding claims, wherein the locking differential (330a) is for a wheel axle, wherein the torque difference is between different sides of the wheel axle, and wherein the processing circuitry is configured to control the brake system to reduce the torque difference by braking one or more wheels on one or more of the different sides of the wheel axle.

7. The computer system of any one of the preceding claims, wherein the locking differential is an inter-axle differential (330c) between two wheel axles, wherein the torque difference is between the two wheel axles, and wherein the processing circuitry is configured to control the brake system to reduce the torque difference by braking the wheels of one or both of the two wheel axles.

8. The computer system of any one of the preceding claims, wherein the transfer case (330b) is between a first set of one or more front wheel axles and a second set of one or more rear wheel axles, wherein the torque difference is between a front wheel drive and a rear wheel drive, and wherein the processing circuitry is configured to control the brake system to reduce the torque difference by braking one or both of the first and second sets.

9. The computer system of any one of the preceding claims, wherein the processing circuitry is configured to request the disengagement of the locking differential and/or transfer case by requesting for removal or reduction of an air and/or hydraulic pressure previously applied to engage the differential lock and/or transfer case.

10. The computer system of any one of the preceding claims, wherein the processing circuitry is configured to request the disengagement of the locking differential and/or transfer case before the torque difference is sufficiently small to allow the disengagement.

11. A vehicle (300) or heavy piece of machinery comprising the computer system (100) of any one of the preceding claims, and the locking differential (330) and/or transfer case.

12. The vehicle of claim 11, wherein the locking differential and/or transfer case comprises at least one spring element for assisting in the disengagement.

13. A computer-implemented method (200) for facilitating disengagement of a locking differential and/or transfer case of a vehicle or piece of heavy machinery, the method being performed by processing circuitry of a computer system, the method comprising:

- receiving (S210), by the processing circuitry, an indication about a desire to disengage the locking differential and/or transfer case;
- initiating (S220), by the processing circuitry and in response to receiving said indication, a disengagement of the locking differential and/or transfer case and, to facilitate said disengagement, controlling (S230) a brake system of the vehicle or piece of heavy machinery to reduce a torque difference on opposite sides of the locking differential and/or transfer case.

14. A computer program comprising program code for performing, when executed by the processing circuitry, the method of claim 13.

15. A computer-readable storage medium comprising instructions which, when executed by the processing circuitry, cause the processing circuitry to perform the method of claim 13.

*Fig. 1*

*Fig. 2A*

*Fig. 2B*

*Fig. 3*

**Fig. 4**

**Fig. 5**

**EP 4 778 797 A1**

Europäisches Patentamt
European Patent Office
Office européen des brevets

## EUROPEAN SEARCH REPORT

**Application Number**

EP 25 15 3023

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2004/054838 A1 (SCANIA CV ABP [SE]; AHLGREN THOMAS [SE]) 1 July 2004 (2004-07-01) | 1-6,9-15 | INV. B60W10/119 B60K23/08 |
| Y | * page 1, line 20 - page 2, line 4 * * page 4, line 22 - page 5, line 20 * ----- | 7,8 | B60W10/14 B60W10/16 B60W30/184 |
| X | DE 199 24 388 C1 (DAIMLER CHRYSLER AG [DE]) 26 July 2001 (2001-07-26) | 1-6,9-15 | B60T7/12 B60T8/1769 |
| Y | * claims 1-10 * * figure 1 * ----- | 7,8 | |
| X | US 2024/383476 A1 (SPÜHLER STEFAN [DE] ET AL) 21 November 2024 (2024-11-21) | 1-6,9-15 | |
| Y | * paragraphs [0035], [0036] * ----- | 7,8 | |
| Y | DE 10 2010 030997 A1 (BOSCH GMBH ROBERT [DE]) 12 January 2012 (2012-01-12) * claims 1,3 * ----- | 7,8 | |

TECHNICAL FIELDS
SEARCHED (IPC)

B60W
B60K
B60T

The present search report has been drawn up for all claims

| Place of search | Date of completion of the search | Examiner |
|---|---|---|
| Munich | 10 June 2025 | Colonna, Massimo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

17

## ANNEX TO THE EUROPEAN SEARCH REPORT
## ON EUROPEAN PATENT APPLICATION NO.

EP 25 15 3023

10-06-2025

| Patent document cited in search report | Publication date | Patent family member(s) | | Publication date |
|---|---|---|---|---|
| WO 2004054838 A1 | 01-07-2004 | AU | 2003303057 A1 | 09-07-2004 |
| | | DE | 10393923 T5 | 01-12-2005 |
| | | SE | 520957 C2 | 16-09-2003 |
| | | WO | 2004054838 A1 | 01-07-2004 |
| DE 19924388 C1 | 26-07-2001 | NONE | | |
| US 2024383476 A1 | 21-11-2024 | CN | 118991740 A | 22-11-2024 |
| | | DE | 102023204674 B3 | 25-07-2024 |
| | | US | 2024383476 A1 | 21-11-2024 |
| DE 102010030997 A1 | 12-01-2012 | NONE | | |

EPO FORM P0459